# FASCICULE DE BREVET EUROPEEN

(11) **EP 3 024 181 B1**
(45) Date de publication et mention de la délivrance du brevet: **04.10.2017**
(21) Numéro de dépôt: 15193096.3
(22) Date de dépôt: 05.11.2015
(51) Int. Cl.: H04L 12/46, H04W 84/00, H04L 29/06, H04W 28/06, H04L 12/741, H04L 29/08

(54) **PROCEDE DE COMMUNICATION DE DONNEES ENTRE UN EQUIPEMENT RADIO ITINERANT ET UNE PASSERELLE D'ACCES RESEAU**
DATENKOMMUNIKATIONSVERFAHREN ZWISCHEN EINEM WANDERNDEN FUNKGERÄT UND EINER NETZZUGANGSSCHNITTSTELLE
DATA COMMUNICATION METHOD BETWEEN A ROAMING WIRELESS DEVICE AND A NETWORK ACCESS GATEWAY

(30) Priorité: 21.11.2014 FR 1402624
(43) Date de publication de la demande: 25.05.2016
(73) Titulaire: THALES, 92400 Courbevoie (FR)
(72) Inventeur: VAN WAMBEKE, Nicolas, 31037 Toulouse Cedex 1 (FR); GADAT, Benjamin, 31170 Tournefeuille (FR)
(74) Mandataire: HAMMES, Pierre

(56) Documents cités:
- EP-A1- 2 007 078
- WO-A1-2008/152535
- US-A1- 2004 001 508

## Description

L'invention concerne le domaine des systèmes de communication dans lesquels un porteur mobile itinérant est amené à communiquer avec un réseau de télécommunications. Le système de communication embarqué dans le porteur itinérant est amené à se connecter au réseau à travers des passerelles d'accès au réseau différentes selon la position du porteur. L'invention concerne ainsi les réseaux de télécommunications dans lesquels une gestion de la mobilité au niveau réseau est effectuée. L'invention concerne enfin le domaine de l'optimisation de l'utilisation de la bande passante sur le lien radio entre le porteur mobile et la passerelle d'accès au réseau.

L'invention porte plus précisément sur un procédé de communication entre un équipement radio itinérant et une passerelle d'accès à un réseau qui permet une optimisation des ressources spectrales consommées sur ce lien de communication.

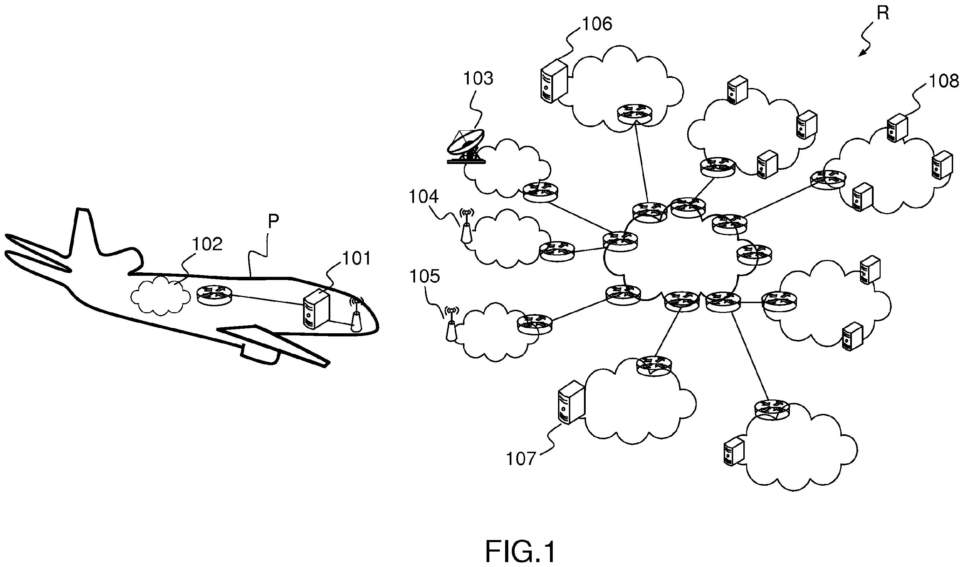

La figure 1 représente un exemple de système de communications dans lequel un porteur mobile P, par exemple un aéronef, communique avec un réseau d'infrastructure fixe R. Un tel système est par exemple adapté à mettre en oeuvre la norme ATN (Aeronautical Telecommunication Network) spécifiée par l'organisation internationale de l'aviation civile (ICAO).

Le porteur mobile P comporte au moins un équipement de communications radio 101 embarqué à bord qui peut lui-même être connecté à un réseau local 102 à bord.

Le porteur mobile P se connecte au réseau d'infrastructure fixe R par le biais d'une passerelle d'accès 103,104,105. Cette passerelle établit une liaison radio avec l'équipement de communications aéroporté 101 selon une technologie de communications radio, par exemple une liaison de communications par satellite. Le porteur mobile P se connecte à une passerelle d'accès 103,104,105 qui est dans sa portée radio. Ainsi, l'accès au réseau R peut se faire via différentes passerelles d'accès 103,104,105. Chaque passerelle d'accès est connectée à un agent personnel 106,107 ou home agent en anglais qui est une entité du réseau R qui a pour rôle la gestion de la mobilité des équipements qui souhaitent se connecter au réseau via les passerelles d'accès. Chaque équipement de communications radio 101 est associé à un agent personnel 106,107. Un agent personnel 106 peut être implémenté dans un équipement distinct de la passerelle d'accès 103 tout en étant relié à cette passerelle ou être implémenté dans le même équipement que la passerelle d'accès 103. Un même agent personnel 106 peut être relié à plusieurs passerelles d'accès 103,104,105.

Dans l'exemple de la figure 1, on considère, à titre illustratif, une liaison de communication entre l'équipement embarqué 101 et un terminal distant 108 connecté au réseau R. Le porteur mobile P se déplace depuis une première zone en portée radio d'une première passerelle 105 vers une seconde zone en portée radio d'une seconde passerelle 103.

Pour établir et maintenir la communication entre l'équipement embarqué 101 et le terminal distant 108 quelle que soit la position du porteur mobile P, deux liaisons réseau sont établies.

Une première liaison réseau est établie entre l'équipement embarqué 101 et le terminal distant 108. La liaison est établie à partir d'une adresse réseau permanente de l'équipement embarqué 101 et une adresse réseau permanente du terminal distant 108.

Afin de gérer la mobilité du porteur P, une seconde liaison réseau est établie en mode tunnel entre une adresse réseau provisoire de l'équipement embarqué 101, qui appartient au même réseau que la passerelle d'accès, et l'adresse réseau de l'agent personnel 106 en charge de la gestion de la mobilité. L'adresse réseau provisoire est allouée par la passerelle d'accès au réseau.

Ce mécanisme de gestion de la mobilité permet d'éviter la mise en oeuvre de mécanismes de routage complexes lorsque le porteur P change de passerelle d'accès au cours de son déplacement.

Cependant, l'utilisation de deux liaisons réseau, dont une par le biais d'un tunnel, pour une même communication point à point entraine des inconvénients. Un paquet de données transmis comporte deux entêtes réseau dont la taille est significative, en particulier pour des réseaux utilisant le protocole IPv6. Un entête IPv6 a une taille de 40 octets. Or la liaison radio entre le porteur mobile P et la passerelle d'accès au réseau est le plus souvent une liaison à faible bande passante disponible, en particulier pour le cas d'une liaison de communication aéronautique. L'utilisation de deux entêtes IPv6 pour établir une liaison de communication entraine une utilisation non optimale des ressources disponibles sur le canal radio car l'introduction de deux entêtes réseau dans chaque paquet transmis diminue d'autant la bande passante disponible pour les données utiles transmises.

Une solution connue permettant d'optimiser les ressources radio dans le cas de transmissions basées sur le protocole réseau IP consiste à utiliser un mécanisme de compression d'entête réseau, tel que le mécanisme RoHC (Robust Header Compression) standardisé par l'organisme IETF sous la référence RFC3095. Par exemple, la demande de brevet américaine US2004/001508 divulgue un procédé basé sur un mécanisme de compression d'en-tête.

Ce mécanisme permet de diminuer la taille de l'entête réseau mais présente d'autres inconvénients. Il nécessite une phase initiale de mise en relation préalable des hôtes pour chaque session d'échanges et est complexe à implémenter. De plus, il requiert également le maintien de la synchronisation entre les contextes sauvegardés par chaque hôte pour pouvoir opérer correctement la décompression des entêtes et est donc sensible à tout phénomène de désynchronisation.

L'invention propose une méthode de transmission entre un équipement radio embarqué dans un porteur mobile et une passerelle d'accès à un réseau fixe qui permet d'optimiser les ressources en bande passante disponible.

La solution proposée par l'invention consiste à supprimer à l'émission les champs prédictibles des entêtes réseau et à reconstruire en réception les entêtes supprimés.

L'invention a pour objet deux procédés de communication de données entre un équipement de communications radio destiné à être embarqué dans un porteur itinérant, et une passerelle connectée à un réseau, les données étant organisées sous la forme de paquets comprenant au moins un premier entête réseau dit entête interne, correspondant à une liaison réseau entre un équipement de communications local appartenant à un réseau local embarqué à bord dudit porteur et un équipement de communications distant connecté audit réseau et un second entête réseau, dit entête externe, correspondant à une liaison réseau entre ledit équipement de communications radio et un agent personnel connecté à la passerelle, suivant les revendications indépendantes 1 et 2.

L'invention a encore pour objet un programme d'ordinateur suivant la revendication indépendante 8.

L'invention a encore pour objet un équipement de communications radio selon la revendication indépendante 9.

L'invention a encore pour objet une passerelle réseau suivant la revendication indépendante 10.

D'autres caractéristiques et avantages de la présente invention apparaîtront mieux à la lecture de la description qui suit en relation aux dessins annexés qui représentent :
- La figure 1, un synoptique d'un réseau de télécommunications dans lequel un porteur mobile peut se connecter à un réseau d'infrastructure fixe,
- La figure 2, un schéma illustrant la mise en oeuvre protocolaire d'une liaison de communication dans le réseau de la figure 1,
- La figure 3, un organigramme illustrant la méthode de transmission de données selon l'invention.

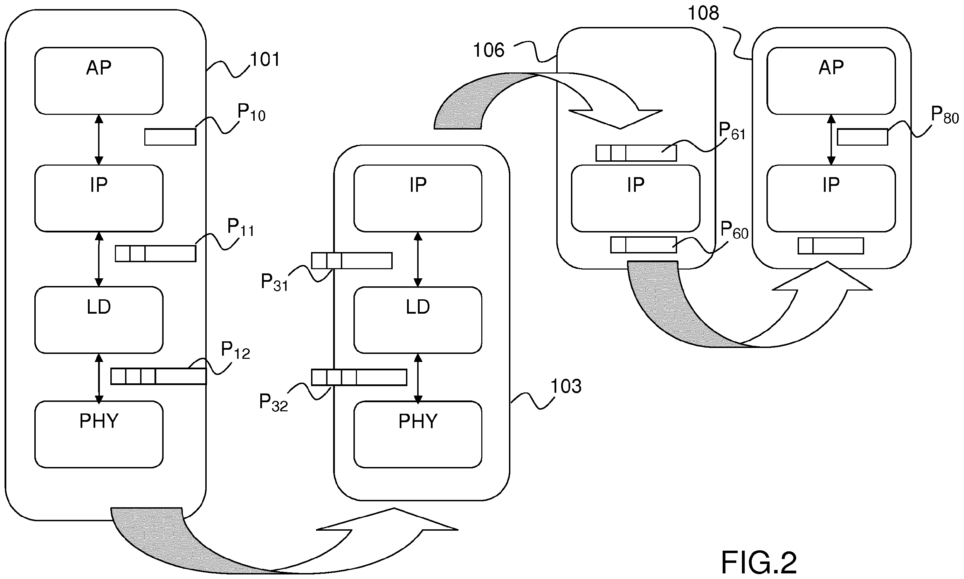

La figure 2 illustre schématiquement les mécanismes mis en oeuvre lors d'une transmission entre l'équipement de communications embarqué 101 et un terminal 108 distant connecté au réseau R.

Le réseau R utilise une architecture protocolaire basée sur un modèle du type comprenant au moins quatre couches : une couche application AP, une couche réseau IP, une couche liaison de données LD et une couche physique PHY. Le modèle d'architecture protocolaire est notamment inspiré du modèle ISO (Interconnection des systèmes ouverts) également connu sous l'acronyme anglais OSI (Open Systems Interconnection) qui comprend sept couches.

Sur la figure 2 est représentée une transmission initiée par l'équipement embarqué 101 à destination du terminal distant 108. Le mécanisme de transmission mis en jeu pour une communication du terminal distant 108 vers l'équipement embarqué 101 est similaire.

Un paquet de données P₁₀ est généré au niveau de la couche applicative de l'équipement embarqué 101 ou d'un équipement connecté au réseau local embarqué dans le porteur mobile P. Le paquet généré P₁₀ est transmis à la couche réseau IP pour être encapsulé deux fois successivement dans un paquet réseau. A cet effet, un premier entête réseau interne est ajouté qui comprend notamment l'adresse réseau permanente de l'équipement radio 101 source et l'adresse réseau permanente du terminal distant 108 destination. Un second entête réseau est également ajouté pour établir la liaison réseau en mode tunnel entre l'équipement radio 101 et l'agent personnel 106. Le second entête réseau externe comprend une adresse réseau provisoire de l'équipement radio 101, allouée par la passerelle 103, et l'adresse réseau permanente de l'agent personnel 106. L'entête réseau interne et l'entête réseau externe sont par exemple des entêtes IPv6.

Le paquet réseau P₁₁ ainsi construit est transmis à la couche liaison de données qui ajoute également un entête spécifique pour générer un nouveau paquet P₁₂ qui est transmis à la couche physique puis transmis par voie radio vers la passerelle 103.

La passerelle 103 désencapsule le paquet reçu P₃₂ jusqu'au niveau de la couche réseau IP. A ce niveau, la passerelle 103 transmet le paquet réseau P₆₁ à l'agent personnel 106 qui supprime l'entête réseau externe et communique le paquet réseau P₆₀ au terminal destination 108 qui récupère le paquet applicatif P₈₀.

L'utilisation d'un second tunnel IP entre l'équipement radio 101 et l'agent personnel 108 permet la gestion de la mobilité du porteur P qui peut se connecter à différentes passerelles d'accès au réseau. L'agent personnel 106 est unique pour chaque porteur P ce qui permet de gérer efficacement l'acheminement des paquets jusqu'à leur destination quelle que soit la position du porteur P.

Comme indiqué en préambule, l'ajout de deux entêtes réseau à chaque paquet engendre une surconsommation de la bande passante de la liaison radio entre le porteur P et la passerelle 103 au détriment du débit alloué aux données utiles.

L'invention propose un mécanisme qui résout ce problème.

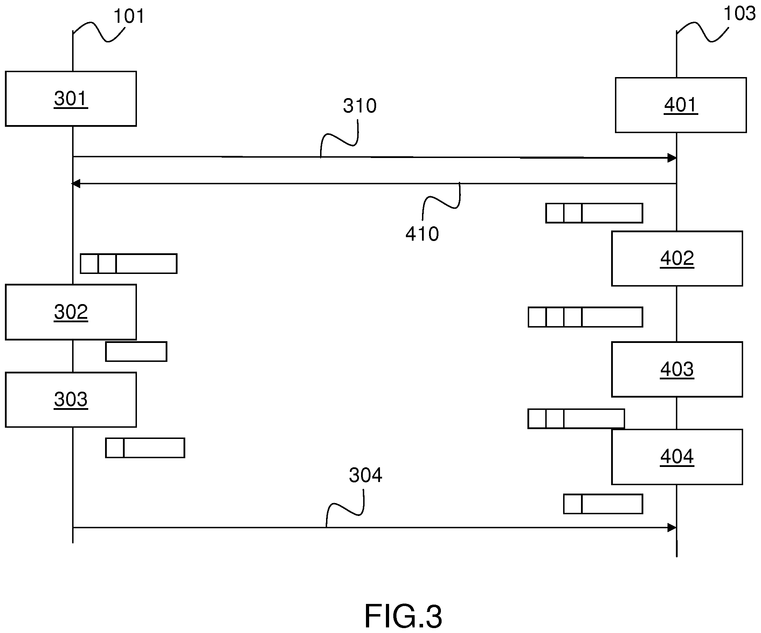

La figure 3 illustre la méthode de transmission de données selon l'invention.

La méthode comporte une première phase initiale d'échange d'informations entre l'équipement radio embarqué 101 et la passerelle 103 puis une seconde phase de transmission de données.

La première phase d'échange d'informations a lieu lorsque le porteur P souhaite s'enregistrer sur le réseau R auprès de la passerelle 103 dont il est le plus proche et en portée radio.

L'équipement radio 101 identifie a priori, dans les deux entêtes réseau des paquets à transmettre, les champs prédictibles lors de toute transmission en provenance ou à destination de l'équipement radio 101 ou du réseau local embarqué dans le porteur P. Par champ prédictible, on entend ici un champ d'entête dont la valeur est fixe ou constante quelle que soit la communication en provenance ou à destination de l'équipement radio 101.

Dans l'entête réseau interne, un champ prédictible est le champ d'adresse permanente de l'équipement radio 101 ou le préfixe de cette adresse permanente dans le cas où son suffixe est utilisé pour allouer des adresses réseau permanentes à différents équipements connectés au sein d'un réseau local embarqué dans le porteur P. L'adresse du terminal distant 108 est en général non prédictible puisqu'on ne sait pas, a priori, avec quel terminal l'équipement radio 101 peut être amené à communiquer. Elle peut cependant être également prédictible dans le cas particulier où le porteur P communique systématiquement avec un même terminal distant.

Dans l'entête réseau externe, un champ prédictible est le champ d'adresse de l'agent personnel 106. En effet, il existe un appariement unique entre chaque porteur itinérant P et un agent personnel en charge de la gestion de la mobilité de ce porteur dans le réseau R.

L'adresse réseau provisoire de l'équipement radio 101, également comprise dans l'entête réseau externe, est allouée par la passerelle d'accès 103 et est donc également prédictible car toutes les communications impliquant l'équipement radio 101 utiliseront cette adresse provisoire.

Dans un mode de réalisation particulier de l'invention, seul un préfixe de l'adresse réseau provisoire est alloué par la passerelle d'accès. Le suffixe de l'adresse réseau provisoire est déterminé à partir du préfixe et d'un identifiant propre à l'équipement radio 101, par exemple un identifiant du type EUI-64. La passerelle d'accès transmet le suffixe à l'équipement radio qui peut ensuite générer la totalité de l'adresse réseau provisoire à partir de l'identifiant.

En résumé, dans la phase initiale d'échanges de la méthode selon l'invention, l'équipement radio 101 identifie 301 les champs prédictibles dont il a connaissance dans les deux entêtes réseau puis les transmet à la passerelle 103. De même, la passerelle 103 identifie 401 les champs prédictibles dont elle a connaissance et les transmet à l'équipement radio 101.

A l'issue de la phase initiale, les deux entités 101,103 parties prenantes dans la liaison radio ont chacune une copie locale des champs prédictibles des deux entêtes réseau.

Dans une seconde phase de transmission de données, un paquet de données P₁₁, provenant de la couche réseau, est intercepté au niveau de la couche liaison de données LD. Les deux entêtes réseau sont supprimés 302. Un entête de liaison est ajouté 303 au paquet. Il comprend les champs non prédictibles des deux entêtes réseau. Par exemple, il comprend l'adresse destination du terminal distant 108. Il peut aussi comprendre le suffixe de l'adresse réseau permanente de l'équipement radio 101 lorsque ce suffixe est utilisé pour allouer plusieurs adresses permanentes à des équipements situés à bord du porteur P, autrement dit lorsque plusieurs équipements à bord du porteur sont adressables au sein du préfixe alloué lors de l'enregistrement du porteur auprès de la passerelle.

Le paquet comprenant l'entête de liaison générée selon l'invention est ensuite transmis 304 à la couche physique puis transmis par voie radio vers la passerelle 103.

A la réception du paquet, les traitements suivants sont effectués par la passerelle au niveau de la couche liaison de données LD. L'entête réseau interne est reconstruit 404 à partir des champs non prédictibles contenus dans l'entête de liaison et des champs prédictibles échangés pendant la phase initiale. L'entête réseau externe est reconstruit 403 à partir des champs prédictibles échangés pendant la phase initiale. Ensuite, l'entête de liaison est supprimé 402.

Le mécanisme de transmission selon l'invention est décrit à la figure 2 dans un exemple non limitatif pour lequel la communication est initiée par l'équipement embarqué 101 vers le terminal distant 108. Mais la transmission peut également être effectuée dans le sens inverse. Dans ce dernier cas, les traitements effectués respectivement par l'équipement radio 101 et par la passerelle 103 sont inversés.

Sans sortir du cadre de l'invention, la méthode de transmission selon l'invention peut également être implémentée au niveau de la couche physique ou de toute couche d'abstraction située à un niveau inférieur à la couche réseau.

L'invention s'applique avantageusement lorsqu'elle est associée au protocole IPv6 car elle permet dans ce cas un gain significatif sur les ressources de transmission économisées du fait de la suppression des entêtes IPv6. Mais l'invention s'applique également au protocole IPv4 ainsi qu'à tout protocole réseau permettant l'adressage unique des hôtes au sein d'un réseau.

Lors de la phase de reconstruction des entêtes réseau, les champs d'entête autres que l'adresse source et l'adresse destination peuvent être reconstruits à partir de champs contenus dans l'entête de liaison ou à partir de valeurs par défauts ou encore à partir de valeurs échangées pendant la phase initiale d'échanges.

Le procédé selon l'invention peut être implémenté à partir d'éléments matériel et/ou logiciel. Il peut notamment être mis en oeuvre en tant que programme d'ordinateur comportant des instructions pour son exécution. Le programme d'ordinateur peut être enregistré sur un support d'enregistrement lisible par un processeur. Le support peut être électronique, magnétique, optique ou électromagnétique.

En particulier, l'invention peut être implémentée par un dispositif comprenant un processeur et une mémoire. Le processeur peut être un processeur générique, un processeur spécifique, un circuit intégré propre à une application (connu aussi sous le nom anglais d'ASIC pour « Application-Specific Integrated Circuit ») ou un réseau de portes programmables in situ (connu aussi sous le nom anglais de FPGA pour « Field-Programmable Gate Array »).

Le dispositif peut utiliser un ou plusieurs circuits électroniques dédiés ou un circuit à usage général. La technique de l'invention peut se réaliser sur une machine de calcul reprogrammable (un processeur ou un micro contrôleur par exemple) exécutant un programme comprenant une séquence d'instructions, ou sur une machine de calcul dédiée (par exemple un ensemble de portes logiques comme un FPGA ou un ASIC, ou tout autre module matériel).

Selon un mode de réalisation, le dispositif comprend au moins un support de stockage lisible par ordinateur (RAM, ROM, EEPROM, mémoire flash ou une autre technologie de mémoire, CD-ROM, DVD ou un autre support à disque optique, cassette magnétique, bande magnétique, disque de stockage magnétique ou un autre dispositif de stockage, ou un autre support de stockage non transitoire lisible par ordinateur) codé avec un programme d'ordinateur (c'est-à-dire plusieurs instructions exécutables) qui, lorsqu'il est exécuté sur un processeur ou plusieurs processeurs, effectue les fonctions des modes de réalisation de l'invention décrits précédemment.

L'invention peut être implémentée dans l'équipement de communications radio 101 embarqué dans le porteur itinérant et dans la passerelle 103 d'accès au réseau. L'invention est implémentée au niveau de la couche de liaison de données ou de toute couche d'abstraction située à un niveau inférieur à la couche réseau.

A titre d'exemple d'architecture matérielle adaptée à mettre en oeuvre l'invention, un dispositif selon l'invention peut comporter un bus de communication auquel sont reliés une unité centrale de traitement ou microprocesseur (CPU, acronyme de « *Central Processing Unit »* en anglais), une mémoire morte (ROM, acronyme de « *Read Only Memory »* en anglais) pouvant comporter les programmes nécessaires à la mise en oeuvre de l'invention; une mémoire vive ou mémoire cache (RAM, acronyme de *« Random Access Memory »* en anglais) comportant des registres adaptés à enregistrer des variables et paramètres créés et modifiés au cours de l'exécution des programmes précités ; et une interface de communication ou E/S (I/O acronyme de « *Input*/*ouput »* en anglais) adaptée à transmettre et à recevoir des données.

La référence à un programme d'ordinateur qui, lorsqu'il est exécuté, effectue l'une quelconque des fonctions décrites précédemment, ne se limite pas à un programme d'application s'exécutant sur un ordinateur hôte unique. Au contraire, les termes programme d'ordinateur et logiciel sont utilisés ici dans un sens général pour faire référence à tout type de code informatique (par exemple, un logiciel d'application, un micro logiciel, un microcode, ou toute autre forme d'instruction d'ordinateur) qui peut être utilisé pour programmer un ou plusieurs processeurs pour mettre en oeuvre des aspects des techniques décrites ici. Les moyens ou ressources informatiques peuvent notamment être distribués ("*Cloud computing*")*,* éventuellement avec selon des technologies de pair-à-pair. Le code logiciel peut être exécuté sur n'importe quel processeur approprié (par exemple, un microprocesseur) ou coeur de processeur ou un ensemble de processeurs, qu'ils soient prévus dans un dispositif de calcul unique ou répartis entre plusieurs dispositifs de calcul (par exemple tels qu'éventuellement accessibles dans l'environnement du dispositif). Le code exécutable de chaque programme permettant au dispositif programmable de mettre en oeuvre les processus selon l'invention, peut être stocké, par exemple, dans le disque dur ou en mémoire morte. De manière générale, le ou les programmes pourront être chargés dans un des moyens de stockage du dispositif avant d'être exécutés. L'unité centrale peut commander et diriger l'exécution des instructions ou portions de code logiciel du ou des programmes selon l'invention, instructions qui sont stockées dans le disque dur ou dans la mémoire morte ou bien dans les autres éléments de stockage précités.

L'invention a pour avantage une économie des données de signalisation transmises sur le lien radio au profit d'une augmentation possible du débit des données utiles.

En particulier, lorsque l'invention est appliquée au protocole IPv6, le gain apporté par la suppression des deux entêtes réseau varie de 56 à 64 octets voire 80 octets dans certains cas.

Un autre avantage lié à l'invention est que la suppression des champs prédictibles des entêtes de chaque paquet transmis sur le lien radio permet d'éviter que ces champs soient impactés par des erreurs de transmission liées au canal de propagation.

## Revendications

1. Procédé de communication de données entre un équipement de communications radio (101) destiné à être embarqué dans un porteur itinérant (P), et une passerelle (103) connectée à un réseau (R), les données étant organisées sous la forme de paquets comprenant au moins un premier entête réseau dit entête interne, correspondant à une liaison réseau entre un équipement de communications local appartenant à un réseau local (102) embarqué à bord dudit porteur (P) et un équipement de communications distant (108) connecté audit réseau (R) et un second entête réseau, dit entête externe, correspondant à une liaison réseau entre ledit équipement de communications radio (101) et un agent personnel (106), home agent, connecté à la passerelle (103), ledit procédé étant **caractérisé en ce qu'**il comprend au moins :
- une phase initiale d'échange d'informations comprenant:
➢ la transmission (310) par l'équipement de communications radio vers la passerelle ou la réception par la passerelle depuis l'équipement de communications radio d'au moins un champ prédictible parmi les champs de l'entête externe et de l'entête interne, un champ prédictible étant un champ d'entête dont la valeur est fixe ou constante quelle que soit la communication en provenance ou à destination de l'équipement de communications radio (101),
➢la réception (410) par l'équipement de communications radio depuis la passerelle ou la transmission par la passerelle vers l'équipement de communications radio d'au moins un champ prédictible de l'entête externe,
- une phase de transmission d'au moins un paquet de données comprenant :
➢ la suppression (302) de l'entête externe et de l'entête interne dudit au moins un paquet de données,
➢ la génération (303), dans ledit au moins un paquet de données, d'un entête de niveau inférieur à une couche réseau comprenant au moins un champ non prédictible parmi les champs de l'entête interne,
➢ la transmission (304) dudit au moins un paquet de données.

2. Procédé de communication de données entre un équipement de communications radio (101) destiné à être embarqué dans un porteur itinérant (P), et une passerelle (103) connectée à un réseau (R), les données étant organisées sous la forme de paquets comprenant au moins un premier entête réseau dit entête interne, correspondant à une liaison réseau entre un équipement de communications local appartenant à un réseau local (102) embarqué à bord dudit porteur (P) et un équipement de communications distant (108) connecté audit réseau (R) et un second entête réseau, dit entête externe, correspondant à une liaison réseau entre ledit équipement de communications radio (101) et un agent personnel (106), home agent, connecté à la passerelle (103), ledit procédé étant **caractérisé en ce qu'**il comprend au moins :
- une phase initiale d'échange d'informations comprenant:
➢ la transmission (310) par l'équipement de communications radio vers la passerelle ou la réception par la passerelle depuis l'équipement de communications radio d'au moins un champ prédictible parmi les champs de l'entête externe et de l'entête interne, un champ prédictible étant un champ d'entête dont la valeur est fixe ou constante quelle que soit la communication en provenance ou à destination de l'équipement de communications radio (101),
➢ la réception (410) par l'équipement de communications radio depuis la passerelle ou la transmission par la passerelle vers l'équipement de communications radio d'au moins un champ prédictible de l'entête externe,
- une phase de réception de données comprenant :
➢ la réception (304) d'au moins un paquet de données comprenant un entête de niveau inférieur à une couche réseau,
➢ la reconstruction (404), dans le paquet de données, d'un entête réseau interne au moins à partir d'au moins un champ prédictible transmis pendant la phase initiale et d'au moins un champ non prédictible compris dans l'entête de niveau inférieur à une couche réseau dudit paquet de données, ledit entête réseau interne correspondant à une liaison réseau entre un équipement de communications local appartenant à un réseau local embarqué à bord dudit porteur et un équipement de communications distant connecté audit réseau,
➢ la reconstruction (403), dans le paquet de données, d'un entête réseau externe au moins à partir d'au moins un champ prédictible transmis pendant la phase initiale, ledit entête réseau externe correspondant à une liaison réseau entre ledit équipement de communications radio et ledit agent personnel, home agent, connecté à la passerelle,
➢ la suppression (402) de l'entête de niveau inférieur à une couche réseau dans ledit paquet de données.

3. Procédé de communication de données selon l'une des revendications précédentes dans lequel les champs prédictibles de l'entête interne comprennent au moins un préfixe de l'adresse réseau permanente de l'équipement de communications radio.

4. Procédé de communication de données selon l'une des revendications précédentes dans lequel les champs non prédictibles de l'entête interne comprennent au moins l'adresse réseau de l'équipement de communications distant connecté audit réseau.

5. Procédé de communication de données selon la revendication 4 dans lequel les champs non prédictibles de l'entête interne comprennent le suffixe de l'adresse réseau permanente de l'équipement de communications radio.

6. Procédé de communication de données selon l'une des revendications précédentes dans lequel les champs prédictibles de l'entête externe comprennent au moins une partie de l'adresse réseau provisoire de l'équipement de communications radio allouée par la passerelle et l'adresse réseau de l'agent personnel, home agent.

7. Procédé de communication de données selon la revendication 5 dans lequel :
- L'adresse réseau provisoire de l'équipement de communications radio est composée d'un préfixe alloué par la passerelle et d'un suffixe généré à partir d'un identifiant propre à l'équipement de communications radio,
- La phase initiale d'échange d'informations comprend :
➢ la transmission par l'équipement de communications radio vers la passerelle ou la réception par la passerelle depuis l'équipement de communications radio dudit identifiant,
➢ la réception par l'équipement de communications radio depuis la passerelle ou la transmission par la passerelle vers l'équipement de communications radio dudit préfixe alloué par la passerelle.

8. Programme d'ordinateur comportant des instructions pour l'exécution du procédé de transmission de données et/ou du procédé de réception de données selon l'une des revendications précédentes, lorsque le programme est exécuté par un processeur.

9. Equipement de communications radio (101) destiné à être embarqué dans un porteur itinérant (P) comprenant des moyens de communication aptes à respecter une architecture réseau selon un modèle en couches comprenant au moins une couche réseau et une couche liaison, lesdits moyens de communication étant configurés pour exécuter le procédé de communication de données selon l'une des revendications 1 à 7.

10. Passerelle réseau (103) destinée à être connectée à un réseau (R) via un agent personnel (106), home agent, du réseau et comprenant des moyens de communication aptes à respecter une architecture réseau selon un modèle en couches comprenant au moins une couche réseau et une couche liaison, lesdits moyens de communication étant configurés pour exécuter le procédé communication de données selon l'une des revendications 1 à 7.

## Patentansprüche

1. Verfahren zum Übermitteln von Daten zwischen einem Funkkommunikationsgerät (101) zur Installation in einem sich bewegenden Träger (P) und einem mit einem Netzwerk (R) verbundenen Gateway (103), wobei die Daten in Form von Paketen organisiert sind, umfassend wenigstens einen ersten Netzwerk-Header, interner Header genannt, entsprechend einer Netzwerkverbindung zwischen einem zu einem lokalen Netzwerk (102) an Bord des Trägers (P) gehörenden lokalen Kommunikationsgerät und einem mit dem Netzwerk (R) verbundenen fernen Kommunikationsgerät (108), und einen zweiten Netzwerk-Header, externer Header genannt, entsprechend einer Netzwerkverbindung zwischen dem Funkkommunikationsgerät (101) und einem mit dem Gateway (103) verbundenen persönlichen Agenten (106), Home Agent, wobei das Verfahren **dadurch gekennzeichnet ist, dass** es wenigstens Folgendes beinhaltet:
- eine anfängliche Informationsaustauschphase, die Folgendes beinhaltet:
➢ Senden (310), durch das Funkkommunikationsgerät zu dem Gateway, oder Empfangen, durch das Gateway von dem Funkkommunikationsgerät, wenigstens eines vorhersagbaren Feldes unter den Feldern des externen und internen Headers, wobei ein vorhersagbares Feld ein Header-Feld ist, dessen Wert fest oder konstant ist, unabhängig von der Beschaffenheit der von dem Funkkommunikationsgerät (101) kommenden oder zu dem Funkkommunikationsgerät gehenden Kommunikation,
➢ Empfangen (410), durch das Funkkommunikationsgerät von dem Gateway, oder Senden, durch das Gateway zu dem Funkkommunikationsgerät, von wenigstens einem vorhersagbaren Feld des externen Headers,
- eine Phase des Sendens von wenigstens einem Datenpaket, die Folgendes beinhaltet:
➢ Unterdrücken (302) des externen Headers und des internen Headers des wenigstens einen Datenpakets,
➢ Erzeugen (303), in dem wenigstens einen Datenpaket, eines Headers auf einem Level, das tiefer ist als eine Netzwerkschicht, umfassend wenigstens ein nicht vorhersagbares Feld unter den Feldern des internen Headers,
➢ Senden (304) des wenigstens einen Datenpakets.

2. Verfahren zum Übermitteln von Daten zwischen einem Funkkommunikationsgerät (101) zur Installation in einem sich bewegenden Träger (P) und einem mit einem Netzwerk (R) verbundenen Gateway (103), wobei die Daten in Form von Paketen organisiert sind, umfassend wenigstens einen ersten Netzwerk-Header, interner Header genannt, entsprechend einer Netzwerkverbindung zwischen einem zu einem lokalen Netzwerk (102) an Bord des Trägers (P) gehörenden lokalen Kommunikationsgerät und einem mit dem Netzwerk (R) verbundenen fernen Kommunikationsgerät (108), und einen zweiten Netzwerk-Header, externer Header genannt, entsprechend einer Netzwerkverbindung zwischen dem Funkkommunikationsgerät (101) und einem mit dem Gateway (103) verbundenen persönlichen Agenten (106), Home Agent, wobei das Verfahren **dadurch gekennzeichnet ist, dass** es wenigstens Folgendes beinhaltet:
- eine anfängliche Informationsaustauschphase, die Folgendes beinhaltet:
➢ Senden (310), durch das Funkkommunikationsgerät zu dem Gateway, oder Empfangen, durch das Gateway von dem Funkkommunikationsgerät, wenigstens eines vorhersagbaren Feldes unter den Feldern des externen und internen Headers, wobei ein vorhersagbares Feld ein Header-Feld ist, dessen Wert fest oder konstant ist, unabhängig von der Beschaffenheit der von dem Funkkommunikationsgerät (101) kommenden oder zu dem Funkkommunikationsgerät gehenden Kommunikation,
➢ Empfangen (410), durch das Funkkommunikationsgerät von dem Gateway, oder Senden, durch das Gateway zu dem Funkkommunikationsgerät, von wenigstens einem vorhersagbaren Feld des externen Headers,
- eine Datenempfangsphase, die Folgendes beinhaltet:
➢ Empfangen (304) von wenigstens einem Datenpaket, das einen Header auf einem Level hat, das tiefer ist als eine Netzwerkschicht,
➢ Rekonstruieren (404), in dem Datenpaket, eines internen Netzwerk-Headers wenigstens auf der Basis von wenigstens einem vorhersagbarem Feld, das während der Anfangsphase gesendet wurde, und wenigstens einem nicht vorhersagbaren Feld, das im Header auf einem Level enthalten ist, das tiefer ist als eine Netzwerkschicht des Datenpakets, wobei der interne Netzwerk-Header einer Netzwerkverbindung zwischen einem zu einem lokalen Netzwerk an Bord des Trägers gehörenden lokalen Kommunikationsgerät und einem mit dem Netzwerk verbundenen fernen Kommunikationsgerät entspricht,
➢ Rekonstruieren (403), in dem Datenpaket, eines externen Netzwerk-Headers wenigstens auf der Basis von wenigstens einem vorhersagbaren Feld, das während der Anfangsphase übertragen wurde, wobei der externe Netzwerk-Header einer Netzwerkverbindung zwischen dem Funkkommunikationsgerät und dem mit dem Gateway verbundenen persönlichen Agenten, Home Agent, entspricht,
➢ Unterdrücken (402) des Headers auf einem Level, das tiefer ist als eine Netzwerkschicht in dem Datenpaket.

3. Verfahren zum Übermitteln von Daten nach einem der vorherigen Ansprüche, bei dem die vorhersagbaren Felder des internen Headers wenigstens ein Präfix der permanenten Netzwerkadresse des Funkkommunikationsgeräts umfassen.

4. Verfahren zum Übermitteln von Daten nach einem der vorherigen Ansprüche, bei dem die nicht vorhersagbaren Felder des internen Headers wenigstens die Netzwerkadresse des mit dem Netzwerk verbundenen fernen Kommunikationsgeräts umfassen.

5. Verfahren zum Übermitteln von Daten nach Anspruch 4, in dem die nicht vorhersagbaren Felder des internen Headers das Suffix der permanenten Netzwerkadresse des Funkkommunikationsgeräts umfassen.

6. Verfahren zum Übermitteln von Daten nach einem der vorherigen Ansprüche, bei dem die vorhersagbaren Felder des externen Headers wenigstens einen Teil der provisorischen Netzwerkadresse des Funkkommunikationsgeräts, zugeordnet durch das Gateway, und die Netzwerkadresse des persönlichen Agenten, Home Agent, umfassen.

7. Verfahren zum Übermitteln von Daten nach Anspruch 5, bei dem:
- die provisorische Netzwerkadresse des Funkkommunikationsgeräts aus einem vom Gateway zugeordneten Präfix und einem auf der Basis einer dem Funkkommunikationsgerät eigenen Kennung erzeugten Suffix besteht,
- die anfängliche Informationsaustauschphase Folgendes beinhaltet:
➢ Senden der Kennung durch das Funkkommunikationsgerät zu dem Gateway oder Empfangen der Kennung durch das Gateway von dem Funkkommunikationsgerät,
➢ Empfangen des vom Gateway zugeordneten Präfix durch das Funkkommunikationsgerät von dem Gateway oder Senden des Präfix durch das Gateway zu dem Funkkommunikationsgerät.

8. Computerprogramm, das Befehle zum Ausführen des Verfahrens zum Senden von Daten und/oder des Verfahrens zum Empfangen von Daten nach einem der vorherigen Ansprüche umfasst, wenn das Programm von einem Prozessor ausgeführt wird.

9. Funkkommunikationsgerät (101) zur Installation in einem sich bewegenden Träger (P), umfassend Kommunikationsmittel, die eine Netzwerkarchitektur gemäß einem Schichtmodell einhalten können, umfassend wenigstens eine Netzwerkschicht und eine Verbindungsschicht, wobei die Kommunikationsmittel zum Ausführen des Verfahrens zum Übermitteln von Daten nach einem der Ansprüche 1 bis 7 konfiguriert sind.

10. Netzwerk-Gateway (103) zur Verbindung mit einem Netzwerk (R) über einen persönlichen Agenten (106), Home Agent, des Netzwerks, umfassend Kommunikationsmittel, die eine Netzwerkarchitektur gemäß einem Schichtmodell einhalten können, das wenigstens eine Netzwerkschicht und eine Verbindungsschicht umfasst, wobei die Kommunikationsmittel zum Ausführen des Datenübermittlungsverfahrens nach einem der Ansprüche 1 bis 7 konfiguriert sind.

## Claims

1. A data communication method between a radio communications equipment item (101) intended to be embedded in a roaming carrier (P), and a gateway (103) connected to a network (R), the data being organised in the form of packets comprising at least a first network header, called the internal header, corresponding to a network link between a local communications equipment item belonging to a local network (102) embedded onboard said carrier (P) and a remote communications equipment item (108) connected to said network (R) and a second network header, called the external header, corresponding to a network link between said radio communications equipment item (101) and a home agent (106) connected to the gateway (103), said method being **characterised in that** it comprises at least:
- an initial information exchange phase comprising:
➢ the transmission (310) by the radio communications equipment item to the gateway or the reception by the gateway from the radio communications equipment item of at least one predictable field out of the fields of the external header and of the internal header, a predictable field being a header field the value of which is fixed or constant whatever the communication coming from or going to the radio communications equipment item (101),
➢ the reception (410) by the radio communications equipment item from the gateway or the transmission by the gateway to the radio communications equipment item of at least one predictable field of the external header,
- a phase of transmission of at least one data packet comprising:
➢ the deletion (302) of the external header and of the internal header of said at least one data packet,
➢ the generation (303), in said at least one data packet, of a header of a level lower than a network layer comprising at least one non-predictable field out of the fields of the internal header,
➢ the transmission (304) of said at least one data packet.

2. A data communication method between a radio communications equipment item (101) intended to be embedded in a roaming carrier (P), and a gateway (103) connected to a network (R), the data being organised in the form of packets comprising at least a first network header, called the internal header, corresponding to a network link between a local communications equipment item belonging to a local network (102) embedded onboard said carrier (P) and a remote communications equipment item (108) connected to said network (R) and a second network header, called the external header, corresponding to a network link between said radio communications equipment item (101) and a home agent (106) connected to the gateway (103), said method being **characterised in that** it comprises at least:
- an initial information exchange phase comprising:
➢ the transmission (310) by the radio communications equipment item to the gateway or the reception by the gateway from the radio communications equipment item of at least one predictable field out of the fields of the external header and of the internal header, a predictable field being a header field the value of which is fixed or constant whatever the communication coming from or going to the radio communications equipment item (101),
➢ the reception (410) by the radio communications equipment item from the gateway or the transmission by the gateway to the radio communications equipment item of at least one predictable field of the external header,
- a data reception phase comprising:
➢ the reception (304) of at least one data packet comprising a header of a level lower than a network layer,
➢ the reconstruction (404), in the data packet, of an internal network header at least from at least one predictable field transmitted during the initial phase and at least one non-predictable field included in the header of a level lower than a network layer of said data packet, said internal network header corresponding to a network link between a local communications equipment item belonging to a local network embedded onboard said carrier and a remote communications equipment item connected to said network,
➢ the reconstruction (403), in the data packet, of an external network header at least from at least one predictable field transmitted during the initial phase, said external network header corresponding to a network link between said radio communications equipment item and said home agent connected to the gateway,
➢ the deletion (402) of the header of a level lower than a network layer in said data packet.

3. The data communication method according to either of the preceding claims, wherein the predictable fields of the internal header comprise at least a prefix of the permanent network address of the radio communications equipment item.

4. The data communication method according to any of the preceding claims, wherein the non-predictable fields of the internal header comprise at least the network address of the remote communications equipment item connected to said network.

5. The data communication method according to Claim 4, wherein the non-predictable fields of the internal header comprise the suffix of the permanent network address of the radio communications equipment item.

6. The data communication method according to any of the preceding claims, wherein the predictable fields of the external header comprise at least a part of the temporary network address of the radio communications equipment item allocated by the gateway and the network address of the home agent.

7. The data communication method according to Claim 5, wherein:
- the temporary network address of the radio communications equipment item is made of up a prefix allocated by the gateway and of a suffix generated from an identifier specific to the radio communications equipment item,
- the initial information exchange phase comprises:
➢ the transmission by the radio communications equipment item to the gateway or the reception by the gateway from the radio communications equipment item of said identifier,
➢ the reception by the radio communications equipment item from the gateway or the transmission by the gateway to the radio communications equipment item of said prefix allocated by the gateway.

8. A computer programme comprising instructions for the execution of the data transmission method and/or of the data reception method according to any of the preceding claims, when the programme is executed by a processor.

9. A radio communications equipment item (101) intended to be embedded in a roaming carrier (P) comprising communication means suitable for observing a network architecture according to a layered model comprising at least a network layer and a link layer, said communication means being configured to execute the data communication method according to any of Claims 1 to 7.

10. A network gateway (103) intended to be connected to a network (R) via a home agent (106) of the network and comprising communication means suitable for observing a network architecture according to a layered model comprising at least a network layer and a link layer, said communication means being configured to execute the data communication method according to any of Claims 1 to 7.
